# EUROPÄISCHE PATENTSCHRIFT

(11) **EP 2 093 805 B1**
(45) Veröffentlichungstag und Bekanntmachung des Hinweises auf die Patenterteilung: **18.04.2012**
(21) Anmeldenummer: 09075056.3
(22) Anmeldetag: 06.02.2009
(51) Int. Cl.: H01L 31/048, H01L 31/042, F24J 2/52

(54) **Photovoltaikmodul mit einer Windsogsicherung**
Photovoltaic module with a wind suction protection
Module photovoltaïque doté d'une protection contre l'aspiration par le vent

(30) Priorität: 21.02.2008 DE 102008010712
(43) Veröffentlichungstag der Anmeldung: 26.08.2009
(73) Patentinhaber: SOLON SE, 12489 Berlin (DE)
(72) Erfinder: Schwarze, Sascha Oliver, 12277 Berlin (DE)

(56) Entgegenhaltungen:
- WO-A-99/23706
- DE-A1- 10 348 946
- DE-B3-102005 018 687
- DE-U1-202007 008 614

## Beschreibung

Die Erfindung bezieht sich auf ein Photovoltaikmodul mit einem biegsamen Photovoltaikpaneel mit mehreren Solarzellenreihen, das über Zwischenstücke mit einem Trägersubstrat fest, aber lösbar verbunden ist, wobei die Zwischenstücke zueinander beabstandet über die Fläche des Photovoltaikpaneels verteilt sind.

Die Photovoltaik bietet unter den erneuerbaren Energieträgern aufgrund der modularen Bauweise der Photovoltaiksysteme aus einzelnen Photovoltaikmodulen (PV-Modulen) die vielseitigsten Einsatzmöglichkeiten. Die Hauptanwendung liegt heute im Bereich der Verbraucheranwendung, d.h., Photovoltaiksysteme werden zur Umsetzung von Sonnenenergie in Elektroenergie genutzt. Dazu müssen die Photovoltaikmodule, die die als Laminat aufgebaute in der Regel biegsame Photovoltaikpaneele aufnehmen, auf sonnenzugänglichen Substraten installiert werden. Hierbei handelt es sich im Allgemeinen um Freiflächen oder Dächer und Fassaden von Bauwerken. Für Photovoltaikmodule auf Flachdächern (Definition nach DIN bis 5° Neigung) ergeben sich auf Grundlage der DIN 1055-T4 und der DIN EN 1991-1- Teil 1 - 4 Lastansätze mit anzusetzenden Windlasten. Bei Flachdächern sind für die Bemessung von Photovoltaiksystemen maßgeblich die Windsoglasten von Bedeutung. Die Ermittlung von Windsoglasten erfolgt nach DIN 1055, Teil 4, der DIN V ENV 1991-2-4 und den "Hinweisen zur Lastenermittlung". Rechnerisch sind Werte für Windsoglasten auf Flachdächern für die Bundesrepublik Deutschland in der Windlastzone 11 zwischen 0,82 kN/m² - 1,02 kN/m² anzusetzen. Es kann daher für Berechnungen ein Wert mit ∼1,00 kN/m² in Ansatz gebracht werden. Für Europa kann davon ausgegangen werden, dass dieser Lastansatz noch erhöht werden muss. Die Lastannahmen für Europa entsprechen der deutschen Windlastzone III.

Ein Windsog entsteht beim Überstreichen des Windes über die Photovoltaikmodule. Die auftretenden Kräfte ("Windsoglasten") führen zu einer Anhebung/Durchbiegung der biegsamen Photovoltaikpaneele nach oben. Um den entstehenden Windsoglasten Stand zu halten, werden PV-Paneele im Allgemeinen mit einem umlaufenden Rahmen gefasst und stabilisiert. Reine Laminate werden mit Laminatklemmen auf Untergestellen befestigt. Durch die Halterung der gerahmten Standard-PV-Module und der Laminate ausschließlich im Randbereich sind die Abmessungen der PV-Module in Länge und Breite durch ihre maximale Durchbiegung, die sich aus den entstehenden Windsoglasten ergeben, aber erheblich begrenzt.

### STAND DER TECHNIK

Aus dem Stand der Technik ist eine Vielzahl von PV-Modulen mit einer Rahmenkonstruktion bekannt. Ein Abstandshalterrahmen zur Einhaltung eines vorgegebenen Abstands zwischen dem PV-Paneel und einem Trägersubstrat ist aus der DE 103 61 184 B3 bekannt. Dem Problem der Durchbiegung des PV-Paneels unter Windsoglasten wird hier durch das Vorsehen einer abdeckenden Glasscheibe, die eine direkte Überstreichung des PV-Paneels von Wind verhindert, und einer ganzflächig lagernden Glasscheibe begegnet. Beide Glasscheiben erhöhen aber bedeutsam das Gewicht und die Beschädigungsanfälligkeit des PV-Moduls.

Auf dem Gebiet der Photovoltaik ist aus der DE 10 2006 044 418 B3 ein PV-Modul bekannt, das über Rahmen an seinen beiden Schmalkanten gestützt und gehaltert wird. Weitere stützende Maßnahmen über die Fläche des PV-Paneels sind hier jedoch nicht vorgesehen. Aus der DE 11 2005 000 528 T5 ist eine Rahmenkonstruktion für PV-Module bekannt, die eine Hinterlüftung des PV-Paneels erlaubt. Neben dem Kühleffekt wird hierdurch auch ein Druckausgleich ober- und unterhalb des PV-Paneels und somit ein zumindest teilweiser Abbau der Windsoglasten erreicht. Aus der DE 200 22 568 U1 ist ein PV-Modul bekannt, das sowohl der Stromerzeugung als auch der Warmwasserbereitung dient. Das PV-Paneel wird durch Abstandshalter auf dem Trägersubstrat abgestützt. Der entstehende Zwischenraum wird durch Durchströmung mit Wasser genutzt. Die Abstandshalter werden nicht weiter erläutert, sind aber unlösbar ausgeführt.

Der der Erfindung nächstliegende Stand der Technik wird in der DE 103 48 946 A1 offenbart. Beschrieben wird ein Verbund aus einem Substrat und einem Trägersubstrat, der auch in der Photovoltaik verwendet werden kann. Dementsprechend kann es sich bei dem Substrat auch um ein Photovoltaikpaneel mit mehreren Solarzellenreihen und bei dem Trägersubstrat um ein solches eines Photovoltaikmoduls handeln. Vorgesehen ist der bekannte Verbund für eine temporäre Trägerung, bei dem bevorzugt ein Dünnstsubstrat für eine Bearbeitung auf einem Trägersubstrat über Zwischenstücke gelagert wird. Das PV-Paneel ist über stabförmige Zwischenstücke mit einem Trägersubstrat fest, aber lösbar verbunden. Dabei sind die stabförmigen Zwischenstücke über die Fläche des Photovoltaikpaneels verteilt und weisen einen Abstand zueinander auf. Die bekannten Zwischenstücke sind jedoch einstückig ausgebildet und mit PV-Paneel und dem Trägersubstrat insbesondere durch eine Klebung oder ein thermisches Verbindungsverfahren, verbunden. Durch das Lösen, das durch massive Krafteinwirkung erfolgen muss, kann es somit zu Beschädigungen der Verbindung kommen, die dann für einen erneuten Einsatz nicht mehr geeignet ist. Eine zerstörungsfreie Revision ist nicht möglich.

Spezielle Windsogsicherungen für PV-Module, über die die PV-Paneele einerseits abgestützt und andererseits gegen Windsog geschützt werden, so dass die PV-Module in ihrer Flächenausdehnung aufgrund von Durchbiegung oder Windsog nicht mehr begrenzt sind und trotzdem ein einfacher Austausch des PV-Paneels möglich ist, sind aus dem Stand der Technik nicht bekannt.

Auf dem Gebiet der Verbindungstechnik ist aus der DE 100 24 764 A1 eine ähnliche Verbundplatte bekannt, bei der eine Metallplatte mit einer Kunststoffplatte über eine Vielzahl von stabförmigen, einstückigen Zwischenstücken fest verklebt ist. Auch hier wäre ein Lösen nur durch Kraftweinwirkung und Beschädigung möglich. Ein einteiliges Verbindungselement für Dämmplatten zur Aufnahme von Windsoglasten ist aus der EP 1 207 245 A2 bekannt. Hierbei wird in eine weiche Dämmplatte eine Druckausgleichsplatte mit einer steilen Auswölbung eingedrückt. Im Bereich der Auswölbung befindet sich ein Durchgangsloch, das zur Aufnahme einer Schraube geeignet ist, mit deren Hilfe die Dämmplatte dann lösbar mit einem Trägersubstrat, hier ein Metallbügel, verbindbar ist. Eine Zugänglichkeit von oben ist aber Voraussetzung für die Verwendung dieses bekannten Verbindungselements.

Aus der Druckschrift DE 4313 739 C2 ist ein zweiteiliges Verbindungselement zur Verbindung von zwei Bauteilen nach dem Druckknopfprinzip bekannt. Dabei ist die hergestellte Verbindung jedoch nicht ohne eine Zerstörung des Verbindungselements möglich. Aus der DE 10 2004 054 942 A1 ist eine ähnliche Ausführung mit einem stabförmigen, zweiteiligen Zwischenstück bekannt, das für die Verbindung von zwei Glasscheiben zu einer Isolierglasscheibe eingesetzt wird. Auch dabei wird zwar das Druckknopfprinzip umgesetzt, allerdings ist wiederum keine Lösung der verbundenen Glasscheiben vorgesehen. Schließlich ist aus der DE 40 34 566 A1 ein zweiteiliges, stabförmiges Verbindungselement für den Gerüstbau bekannt, welches lösbar ausgeführt ist. Hierbei handelt es sich jedoch um eine besonders schwere Ausführungsform eines Verbindungselements.

### AUFGABENSTELLUNG

Ausgehend von der oben genannten DE 103 48946 A1 ist die AUFGABE für die vorliegende Erfindung darin zu sehen, das gattungsgemäße Photovoltaikmodul mit einem biegsamen Photovoltaikpaneel mit mehreren Solarzellenreihen, das über Zwischenstücke mit einem Trägersubstrat fest, aber lösbar verbunden ist, wobei die Zwischenstücke zueinander beabstandet über die Fläche des Photovoltaikpaneels verteilt sind, so weiterzubilden, dass eine effektive Windsogsicherung gegeben ist, die aber gleichzeitig eine zerstörungsfreie Lösung von biegbarem Photovoltaikpaneel und Trägersubstrat ermöglicht. Des Weiteren soll ein Herstellungsverfahren von Photovoltaikmodulen angegeben werden, bei denen eine Windsogsicherung vorgesehen ist. Die **LÖSUNG** für diese Aufgabe ist den nebengeordneten Erzeugnis- und Verfahrensansprüchen zu entnehmen. Vorteilhafte Modifikationen werden in den Unteransprüchen aufgezeigt, die im Folgenden im Zusammenhang mit der Erfindung näher erläutert werden.

Bei dem erfindungsgemäßen Photovoltaik-Modul ist vorgesehen, dass die Zwischenstücke als zumindest zweiteilige Windsogsicherungen aus einem Oberteil und einem Unterteil ausgebildet sind. Dabei sind sie in ihrer Höhe an den durch eine Rahmenkonstruktion vorgegebenen Abstand zwischen dem biegsamen Photovoltaikpaneel und dem Trägersubstrat angepasst. Weiterhin ist erfindungsgemäß das Oberteil fest mit dem biegsamen Photovoltaikpaneel und das Unterteil fest mit dem Trägersubstrat verbunden, wobei Oberteil und Unterteil fest, aber lösbar miteinander verbunden sind. Anschaulich kann eine derartige Windsogsicherung mit dem Begriff "SOLOCK" beschrieben werden, der sowohl Rückbezug auf die Solartechnik (SOL) als auch auf die Verbindungstechnik (LOCK) nimmt. Durch die vorliegende Erfindung werden für PV-Module erstmals spezielle Windsogsicherungen zur Verfügung gestellt, über die die biegsamen PV-Paneele einerseits abgestützt und andererseits gegen Windsog geschützt werden. Direkte Folge dieser Windsogsicherungen ist die mögliche Vergrößerung der PV-Paneelflächen. Dabei haltern die Windsogsicherungen die biegsamen PV-Paneele einerseits, sodass sie im Betrieb nicht durch ihr Eigengewicht durchhängen können. Andererseits schützen die Windsogsicherungen die biegsamen PV-Paneele aber auch vor Durchbiegung nach oben durch anstehende Windsoglasten. Durch die Zweiteilung sorgt die erfindungsgemäße Windsogsicherung aber gleichzeitig auch dafür, dass einzelne PV-Paneele für Wartungsarbeiten oder Austausch problemlos und zerstörungsfrei abgehoben werden können. Dazu sind lediglich die Windsogsicherungen zu lösen. Grundsätzlich besteht die Windsogsicherung bei der Erfindung aus einem Oberteil und einem Unterteil, die durch ihre Formgebung und ggfs. durch zusätzliche Bauelemente lösbar miteinander verbunden werden können. Im Betrieb besteht dadurch immer eine feste Verbindung zwischen biegsamem PV-Paneel und Trägersubstrat. Durch die Summe aller vorgesehenen Windsogsicherungen, die gleichmäßig und mit Abstand über die Fläche des PV-Paneels angeordnet sind, kann so gewährleistet werden, dass sich das biegsame PV-Paneel unter dem Einfluss von Windsog nicht unzulässig nach oben durchbiegt. Im Falle einer Wartung oder eines Austauschs des PV-Paneels werden entsprechend alle Windsogsicherungen zerstörungsfrei gelöst. Danach kann das PV-Paneel wieder mit denselben Elementen gesichert werden oder es wird ein vorbereitetes Ersatz-PV-Paneel, das auf seiner Unterseite die entsprechenden Oberteile der Windsogsicherung in der entsprechende Anordnung trägt, aufgesetzt und über die Unterteile auf dem Trägersubstrat fest verbunden werden.

Das Oberteil der Windsogsicherung wird je nach statischen Erfordernissen auf der Rückseite des PV-Paneels befestigt. Das Unterteil wird je nach Einbausituation ggfs. mit einem Gegenlager verbunden. Zur Befestigung der Windsogsicherung können Klebe- und/oder Schraubverbindungen je nach Erfordernis gewählt werden. Durch die Formgebung und die zweiteilige Bauweise kann das PV-Paneel zerstörungsfrei vom Trägersubstrat gelöst werden. Durch das Verriegeln der Windsogsicherung entsteht ein Lager, das in der Lage ist, Zugkräfte aus dem PV-Paneel in die Unterkonstruktion abzuleiten. Mit der erfindungsgemäßen Windsogsicherung können somit größere PV-Module in Länge und Breite realisiert werden, ohne die Querschnitte der tragenden Rahmenkonstruktion erhöhen zu müssen. Die Durchbiegung bei anstehenden Windsoglasten kann deutlich reduziert werden. Daraus resultiert, dass ein Ausfall des PV-Moduls aufgrund von Durchbiegung, die Stress für die Solarzellen und die Zellverbinder bedeutet, erheblich seltener auftritt. Die erfindungsgemäße Windsogsicherung kann bei horizontal liegenden PV-Modulen und auch bei zweiseitig gelagerten PV-Modulen eingesetzt werden. Auch ein Einsatz als Fassadenhalterung ist möglich.

Aufgrund des vorgegebenen Abstands zwischen PV-Paneel und Trägersubstrat weisen die Windsogsicherungen bevorzugt eine längliche, stabförmige Ausbildung auf. Andere Ausbildungsformen, beispielsweise block- oder kugelförmig sind aber ebenfalls ohne weiteres möglich. In einer weiteren bevorzugten Ausführungsform des Photovoltaikmoduls ist vorgesehen, dass das Oberteil und das Unterteil durch eine Klebung oder eine Verschraubung mit dem Photovoltaikpaneel oder dem Trägersubstrat verbunden sind. Eine formschlüssige oder einstückige Verbindung ist ebenfalls möglich.

Weiterhin kann bevorzugt vorgesehen sein, dass das Unterteil der Windsogsicherung als Steckwelle ausgebildet ist, die an ihrem dem Photovoltaikpaneel zugewandten Ende eine Steckplatte mit einem größeren Durchmesser als die Steckwelle aufweist. Eine derartige Steckwelle kann in ihrer Länge einfach an die vorhandenen Platzverhältnisse angepasst werden. Zur Kraftverteilung kann sie vorteilhaft mit einer Bodenplatte fest verbunden sein. Im Material kann sie beispielsweise aus Metall oder auch aus einem Kunststoff, beispielsweise Polyamid, bestehen. Dabei kann das Material auch undurchsichtig sein, da keine störende Anordnung im Lichteinfallsbereich vorgesehen ist. Besonders vorteilhaft kann diese Ausführungsform mit einer Steckwelle bei Glas-Glas-Modulen, PV-Paneelen mit Bifacial-Zellen oder PV-Paneelen mit transparenter Rückseitenfolie eingesetzt werden. Das Oberteil der Windsogsicherung ist dann entsprechend als Steckbock mit einer an dem dem Trägersubstrat zugewandten Ende seitlichen Aufnahmeöffnung für die Steckwelle ausgebildet, wobei der Steckbock beispielsweise aus klarem PMMA ausgebildet und damit lichtdurchlässig ist, sodass sich keine Verringerung der eingestrahlten Lichtmenge durch die Windsogsicherungen ergibt. Außerdem weist der Steckbock eine Hinterschneidung für die Steckplatte auf, sodass die Steckwelle nach ihrem Einschieben in den Steckbock durch die seitliche Aufnahmeöffnung mit ihrer Steckplatte über die Hinterschneidung rutscht, sodass ein axiales Auseinanderziehen von Steckwelle und Steckbock in die unverbundene Position vermieden ist. Es entsteht eine sichere Verbindungsmöglichkeit von Steckwelle und Steckbock nach dem Bajonettprinzip. Zum gleichzeitigen Einschieben alle Steckwellen in die vorgesehenen Steckböcke ist es dabei erforderlich, dass die Aufnahmeöffnungen der Steckbock aller vorgesehenen Windsogsicherungen in die gleiche Richtung orientiert sind.

Bei einer anderen Ausführungsform der Windsogsicherung nach der Erfindung kann vorteilhaft vorgesehen sein, dass das Unterteil der Windsogsicherung als Zapfenaufnahme mit zwei einander diametral gegenüberliegenden azimutalen Langlöchern ausgebildet ist. Das Oberteil der Windsogsicherung ist dann als Zapfen mit einer azimutalen Umlaufnut ausgebildet. Der Zapfen wird in die Zapfenaufnahme gesteckt. Durch Eingreifen einer Omegafeder in die Umlaufnut durch die Langlöcher hindurch wird ein axiales Herausziehen verhindert. Die Omegafeder kann von Hand oder mit einem gekröpften Werkzeug relativ einfach herausgezogen werden. Das Einstecken kann ebenfalls von Hand oder mit dem geköpften Werkzeug erfolgen. Um dabei eine gute Zugänglichkeit der Windsogsicherung zu erreichen, ist es vorteilhaft, wenn die Windsogsicherungen im Randbereich des Photovoltaikmoduls angeordnet sind. Ansonsten sind entsprechend lange Werkzeuge zur Ver- und Entriegelung der Windsogsicherungen einzusetzen.

Schließlich können vorteilhaft Oberteil und Unterteil der Windsogsicherung nach dem Druckknopfprinzip ausgebildet sein. Bevorzugt ist dabei das Oberteil der Windsogsicherung als Kugelkopf und das Unterteil als Kugelkorb mit elastischen Lamellen ausgebildet. Die elastischen Lamellen werden von einem Federring an den Kugelkopf angedrückt, um die erforderliche Haltekraft zwischen Ober- und Unterteil unter Windsogbelastung zu erzeugen. Bei Einführen des Kugelkopfes in den Kugelkorb werden die Lamellen entsprechend zurückgedrückt. Somit sind Ober- und Unterteil so ausgebildet, dass eine zerstörungsfreie Trennung und erneute Verbindung möglich ist (ähnlich wie bei einem Klickparkett mit Soft-Lock-Profil oder einem Kugelsteckgelenk bei einer Stabantenne oder einer Kurvenstütze einer Modellautorennbahn).

Mittels der Windsogsicherung nach der Erfindung kann ein Photovoltaikpaneel nahezu an jedes beliebige Trägersubstrat in horizontaler, vertikaler oder geneigter Ausrichtung windsogsicher angekoppelt werden. Besonders eignet sich die Windsogsicherung, wenn das Trägersubstrat als Leichtbauplatte oder als Fassadenplatte ausgebildet ist. Insbesondere bei einer Leichtbauplatte kann dann die Steckwelle einer Windsogsicherung durch die Leichtbauplatte hindurchgreifen und mit zumindest einer Druckverteilungsplatte gegenüber der Leichtbauplatte abgestützt sein. So wird eine sichere Kopplung an die relativ empfindliche Leichtbauplatte erreicht, ohne dass diese durch Krafteinwirkung aufgrund der abgeleiteten Windsoglasten beeinträchtigt wird.

Im Gegenzug kann auch jedes beliebige PV-Paneel mit der Windsogsicherung nach der Erfindung gegen angreifende Windsoglasten gesichert werden. Es kann jede Art von Laminat oder Dünnstsubstrat auf einem Trägersubstrat eingesetzt werden. Durch den über die Höhe der Windsogsicherungen bzw. über die Rahmenkonstruktion vorgegebenen Abstand zwischen dem Photovoltaikpaneel und dem Trägersubstrat, welcher in der Regel zu einer Hinterlüftung der Solarzellen genutzt wird, können auch vorteilhaft Photovoltaikpaneele eingesetzt werden, die auf beiden Seiten aktiv sind (so genannten "Bifacialpaneele mit einer Belegung mit Solarzellen auf beiden Oberflächen). Um das zwischen den Solarzellenreihen hindurchfallende Licht auf der Unterseite derartiger PV-Paneele nutzen zu können, ist es dabei erforderlich, dass auf dem Trägersubstrat eine Reflektorfolie angeordnet ist. Die Unterteile der Windsogsicherungen greifen dann durch die Reflektorfolien hindurch in das Trägersubstrat, beispielsweise eine Leichtbauplatte, ein.

Die Anzahl und Verteilung der erforderlichen Windsogsicherungen über die Fläche eines PV-Paneels ist von dessen Größe, Dicke und Anordnung und Einsatzgebiet individuell anzupassen. Bei dickeren PV-Modulen sind sicherlich weniger Windsogsicherungen erforderlich als bei sehr dünnen, bei kleinen weniger als bei großen. Vorteilhaft ist es bei Standard-PV-Modulen, wenn über die Breite des Photovoltaikmoduls zwei Windsogsicherungen und über die Länge so viele Windsogsicherungen vorgesehen sind, dass immer drei quer verlaufende Solarzellenreihen zwischen zwei Windsogsicherungen liegen. Durch eine derartige Verteilung kann eine optimale Windsogsicherung vorgesehen werden, der Aufwand - auch bei der Montage - dafür aber minimiert werden. In diesem Zusammenhang ist noch zu erwähnten, dass sich ein besonders einfaches Herstellungsverfahren zur gleichzeitigen Ausrichtung und einfachen Arretierung alle Windsogsicherungen ergibt, wenn zunächst alle Unterteile der Windsogsicherungen mit dem Trägersubstrat und dann alle Oberteile mit den Unterteilen verbunden werden. Anschließend werden dann alle Oberteile an ihren dem Photovoltaikpaneel zugewandten Enden mit Klebstoff benetzt. Danach wird das Photovoltaikpaneel auf alle Oberteile aufgelegt, sodass die Oberteile eine feste Verbindung mit dem Photovoltaikpaneel eingehen. Das PV-Paneel ist somit windsogsicher angekoppelt. Zum Lösen müssen nun die implizit optimal ausgerichteten Windsogsicherungen gelöst werden.

### AUSFÜHRUNGSBEISPIELE

Ausbildungsformen des Photovoltaikmoduls mit einer Windsogsicherung nach der Erfindung werden nachfolgend zu deren weiterem Verständnis anhand der schematischen Figuren näher erläutert. Dabei zeigt die:
- **FIGUR 1**: in der Explosionsansicht ein Photovoltaikmodul mit Windsogsicherungen,
- **FIGUR 2**: in der Seitenansicht ein Photovoltaikmodul mit Windsogsicherungen,
- **FIGUR 3**: in der Ansicht eine erste Ausführungsform einer Windsogsicherung,
- **FIGUR 4**: in der Ansicht eine zweite Ausführungsform einer Windsogsicherung,
- **FIGUR 5**: im Längsschnitt eine dritte Ausführungsform einer Windsogsicherung,
- **FIGUR 6**: im Querschnitt die dritte Ausführungsform,
- **FIGUR 7**: in der Seitenansicht eine vierte Ausführungsform einer Windsogsicherung und
- **FIGUR 8**: im Längsschnitt eine fünfte Ausführungsform einer Windsogsicherung.

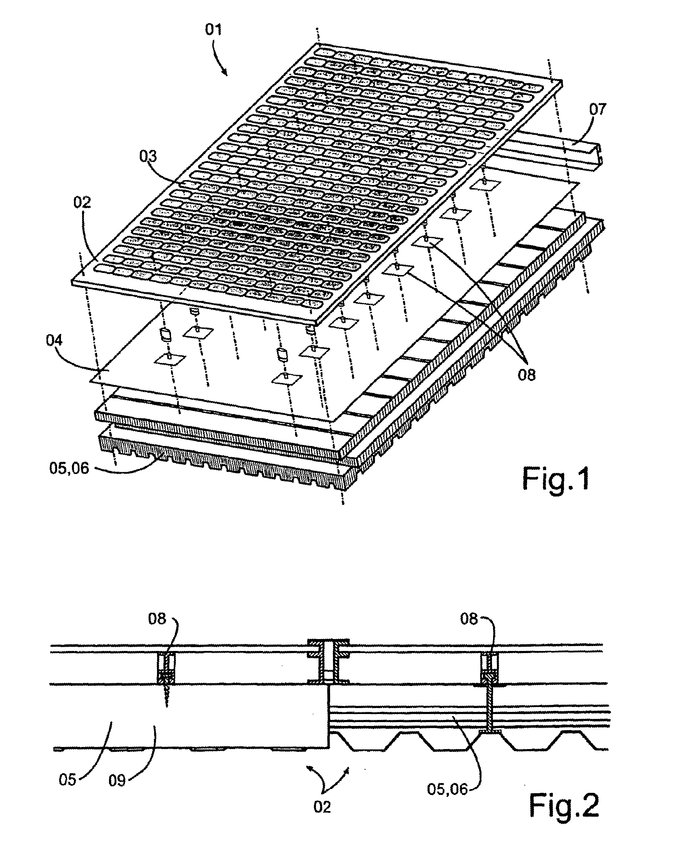

Die **FIGUR 1** zeigt in der Explosionsansicht ein Photovoltaikmodul **01** (PV-Modul) nach der Erfindung mit einem biegsamen Photovoltaikpaneel **02** (PV-Paneel) mit mehreren Solarzellenreihen **03.** Dabei sind diese bifacial aufgebaut, sodass über eine Reflektorfolie **04** auch Licht auf die Unterseite des biegsamen PV-Paneels **02** eingestrahlt und genutzt werden kann. Als Trägersubstrat **05** dient im dargestellten Ausführungsbeispiel eine Leichtbauplatte **06.** Das PV-Modul **01** wird zumindest an den Schmalseiten von Rahmenkonstruktionen **07** abgeschlossen, die den Einbauabstand zwischen dem PV-Paneel **02** und dem Trägersubstrat **05** vorgeben. Gleichmäßig und mit Abstand ist über die Fläche des PV-Paneels **02** eine Vielzahl von Windsogsicherungen **08** als Zwischenstücke verteilt, die die PV-Paneele **02** in einer festen Verbindung lagern, sodass diese sich weder unter Druckkraft (Schwerkraft/-last, Durchbiegung nach unten) noch unter Zugkraft (Windsogkraft/-last, Durchbiegung nach oben) durchbiegen können. Eine Beeinträchtigung der Solarzellen oder des PV-Moduls **01** aufgrund von Durchbiegung kann somit nicht auftreten. Bei einer ungefähren Länge des PV-Moduls **01** von 1830 mm können in der Länge 8 Windsogsicherungen **08** vorgesehen sein, sodass immer 3 Solarzellenreihen **03** zwischen zwei Windsogsicherungen **08** liegen. Bei einer Breite des PV-Moduls **01** von ungefähr 1000 mm reichen 2 Windsogsicherungen **02** in der Breite aus, sodass insgesamt 16 Windsogsicherungen **02** für ein PV-Modul **01** der angegebenen Größe ausreichen und benötigt werden. In der Höhe sind die Windsogsicherungen **08** an den vorgegebenen Einbauabstand zwischen PV-Paneel **02** und Trägersubstrat **05** angepasst, sie sind grundsätzlich zweistückig aufgebaut.

Die **FIGUR 2** zeigt zwei aneinander grenzende PV-Module **02** in der Seitenansicht, wobei das linke PV-Modul **02** das Trägersubstrat **05** mit einer Substratabdeckung **09** und das rechte PV-Modul **02** direkt das Trägersubstrat **05** in Form einer Leichtbauplatte **06** zeigt. Weiterhin sind 2 Windsogsicherungen **08** dargestellt. Die beiden linken Windsogsicherungen **08** greifen in die Substratabdeckung **09** ein, die beiden rechten Windsogsicherungen **08** greifen in die Leichtbauplatte **06** ein.

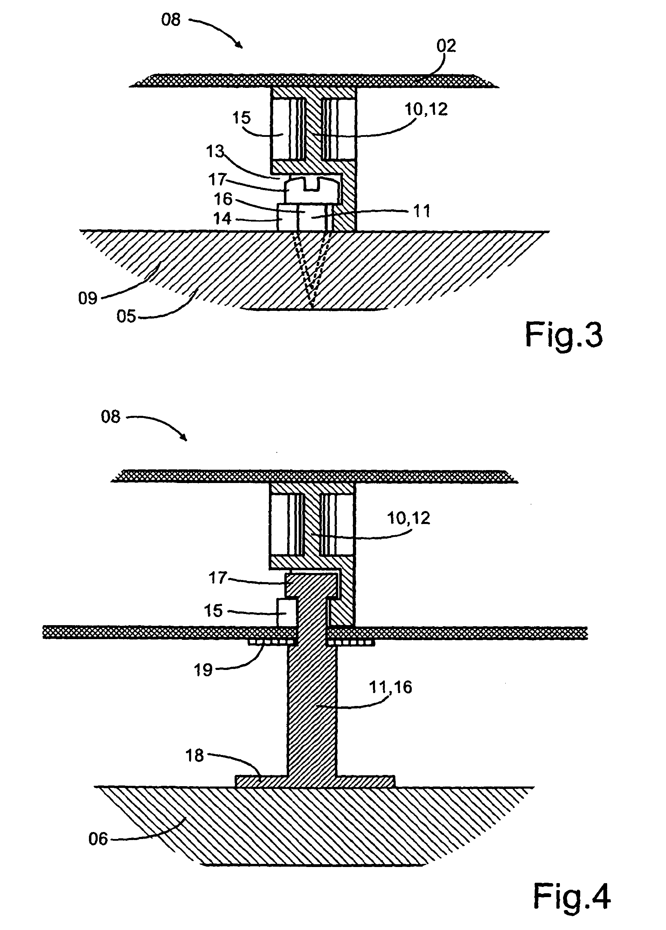

In der **FIGUR 3** ist ein Detail im Bereich einer Windsogsicherung **08** gezeigt, die in die Rahmenabdeckung **09** eingreift. Grundsätzlich besteht jede Windsogsicherung **08** aus einem Oberteil **10** und einem Unterteil **11,** wobei das Oberteil **10** fest mit dem PV-Paneel **02** und das Unterteil **11** fest mit dem Trägersubstrat **05** verbunden ist, beispielsweise durch eine Klebung oder eine Verschraubung. Oberteil **10** und Unterteil **11** sind zwar fest, aber lösbar miteinander verbunden.

In der **FIGUR 3** ist das Oberteil **10** der Windsogsicherung **08** als zylindrischer Steckbock **12** mit einer an dem dem Trägersubstrat **05** zugewandten Ende vorgesehenen seitlichen Aufnahmeöffnung **13** mit einer Hinterschneidung **14** ausgebildet. Im Steckbock **12** sind vier Ausnehmungen **15** zur Gewichtsreduzierung und zur besseren Handhabung vorgesehen. Zur Vermeidung von Lichtbeeinflussung ist der Steckbock **12** aus transparentem PMMA gefertigt. Das Unterteil **11** der Windsogsicherung **08** besteht in dieser Ausführungsform aus einer einfachen Schraube als Steckwelle **16,** deren Linsenkopf eine Steckplatte **17** bildet, die hinter die Hinterschneidung **14** im Oberteil **10** greift, sodass ein axiales Trennen von Oberteil **10** und Unterteil **11** nicht möglich ist. Ein Entriegeln der Windsogsicherungen **08** für eine Abnahme des PV-Paneels **02** erfolgt durch eine seitliche Bewegung in die entgegengesetzte Richtung. Bei dieser Ausführungsform ist zu berücksichtigen die die Aufnahmeöffnungen **13** aller vorgesehenen Windsogsicherungen **08** gleich orientiert sind. Zur Verbindung, beispielsweise nach einer Revision, wird das PV-Paneel **02** mit den daran befestigten Oberteilen **10** der Windsogsicherungen **08** mit den Aufnahmeöffnungen **13** genau neben den Unterteilen **11** auf dem Trägersubstrat **05** platziert. Dann wird das PV-Paneel **02** seitlich so verschoben, dass alle Steckwellen **16** in die Aufnahmeöffnungen **13** hineingeschoben werden und die Steckplatten **17** in die Hinterschneidungen **14** eingreifen.

Die zuvor beschriebene Montageweise bezieht sich auf die Einzelanordnung eines PV-Moduls **01.** Bei einer matrixartigen Anordnung einer Vielzahl von PV-Moduls 01 in einem Photovoltaiksystem ist bei der bajonettartigen Ausführungsform der Windsogverbindungen **08** darauf zu achten, dass die Spalte zwischen den einzelnen PV-Modulen **01** ausreichend breit sind, sodass die seitlichen Verschiebebewegungen des PV-Paneels **02** zur Montage und Demontage ausgeführt werden können. Bei einer Ausführungsform der Windsogsicherung **08** mit einer Omegafeder (siehe unten) ist zwar kein seitliches Verschieben erforderlich, der Spalt ist aber so breit zu gestalten, dass ein Zugang an die Windsogsicherungen **08** möglich ist. Alternativ ist diese Ausführungsform nur im zugänglichen Randbereich der PV-Module **01** anzuordnen. Keine Einschränkungen ergeben sich bei einer Ausführungsform der Windsogsicherung **08** nach dem Druckknopfprinzip (siehe unten). Die Montage und Demontage des PV-Paneels **02** erfolgt ausschließlich durch dessen Absenken oder Anheben. Eine Zugänglichkeit zu den Windsogsicherungen durch die Spalte zwischen den einzelnen PV-Modulen **01** hindurch oder vom Rand der PV-Modulen **01** her ist nicht erforderlich.

Bei einer Erstmontage eines PV-Paneels **02** ist es besonders einfach, wenn zunächst die Unterteile **11** mit dem Trägersubstrat **05** verbunden werden. Dann werden die Oberteile **10** eingesteckt und verriegelt und auf ihrer Oberseite mit Kleber versehen. Abschließend wird das PV-Paneel **02** auf die klebenden Oberteile **10** gedrückt, sodass sich eine richtige Positionierung der Ober- und Unterteile **10, 11** aller Windsogsicherungen **08** im verriegelten Zustand automatisch ergibt. Diese vereinfachte Erstmontage kann bei alle genannten Ausführungsformen der Windsogsicherung **08** angewendet.

In der **FIGUR 4** ist ein Detail im Bereich einer Windsogsicherung **08** gezeigt, die im Bereich der Leichtbauplatte **06** angeordnet ist. Das Oberteil **10** der Windsogsicherung **08** ist identisch mit dem Oberteil **10** gemäß **FIGUR 3** als zylindrischer Steckbock **12** aus PMMA (Polymethylmethacrylat) ausgebildet. Das Unterteil **11** besteht hierbei jedoch aus einer langen Steckwelle **16,** die durch die Leichtbauplatte **06** hindurchgeht. Am Fuß ist die Steckwelle **16,** die beispielsweise aus undurchsichtigem PA (Polyamid) besteht, mit einer Bodenplatte **18** fest verbunden. Die Steckplatte **17** am oberen Ende ist als kleiner Zylinder ausgebildet, der hinter die Ausnehmung **15** im Steckbock **12** greift. Zur Lastverteilung und damit zur Vermeidung von Beschädigungen der relativ weichen Leichtbauplatte **06** ist noch eine Druckverteilungsplatte **19** am oberen Ende der Steckwelle **16** auf der Oberfläche der Leichtbauplatte **06** vorgesehen. Die Bodenplatte **18** hat ebenfalls Lastverteilungsaufgaben.

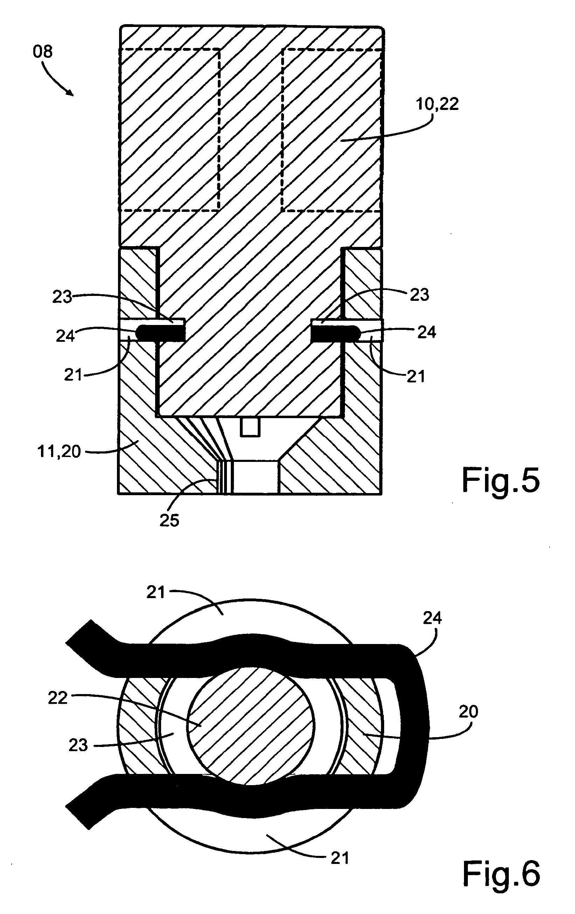

In der **FIGUR 5** ist eine dritte Ausführungsform einer Windsogsicherung **08** im Längsschnitt dargestellt. Hierbei ist das Unterteil **11** als Zapfenaufnahme **20** mit zwei diametral gegenüberliegenden azimutalen Langlöchern **21** und das Oberteil **10** als Zapfen **22** mit einer azimutalen Umlaufnut **23** ausgebildet. In die Umlaufnut **23** greift im verriegelten Zustand der Windsogsicherung **08** eine Omegafeder **24** durch die Langlöcher **21** hindurch und verhindert ein axiales Auseinanderziehen von Ober- und Unterteil **10, 11.** Die Zapfenaufnahme **20** weist noch eine Durchgangsbohrung **25** zur Verbindung mit dem Trägersubstrat **05** auf. Beispielsweise kann eine Spezialschraube durch die Durchgangsbohrung **25** durchgeführt werden, die in einen Dämmstoffdübel in der Leichtbauplatte **06** aus Hartschaum eingreift.

Die **FIGUR 6** zeigt in der Schnittdarstellung kurz oberhalb der Omegafeder **24** die Zapfenaufnahme **20** mit den beiden Langlöchern **21** und den Zapfen **22** mit der Umlaufnut **23,** in die die Omegafeder **24** durch die Langlöcher **21** hindurch eingreift.

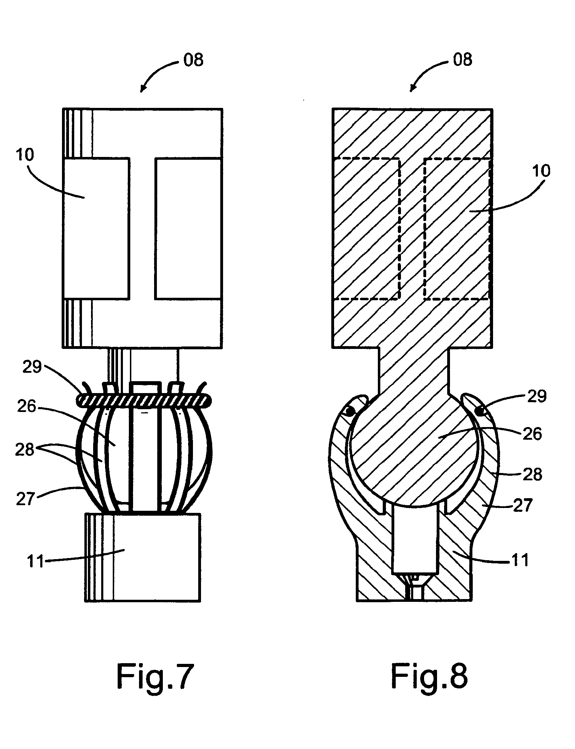

Die **FIGUR 7** zeigt in der Seitenansicht eine vierte und die FIGUR **8** im Längsschnitt eine fünfte mögliche Ausführungsform der Windsogsicherung **08** nach dem wiederverschließbaren Druckknopfprinzip. Das Oberteil **10** weist einen Kugelkopf **26** auf, der beispielsweise durch Klebung oder Verschraubung mit dem PV-Paneel **02** fest verbunden ist. Dieser greift in einen Kugelkorb **27** am Unterteil **11** der Windsogsicherung ein, der ebenfalls durch Klebung oder Verschraubung (siehe Durchgangsbohrung) mit dem Trägersubstrat **05** fest verbunden ist. Der Kugelkorb **27** bzw. das gesamte Unterteil **11** sind beispielsweise aus Stahl (**FIGUR 7**) oder Kunststoff (**FIGUR 8**) gefertigt, sodass die einzelnen Lamellen **28** zwar biegsam sind und beim Zurückbiegen durch den Kugelkopf **26** nicht abbrechen. Die Haltekraft auf den Kugelkopf **26** wird über den Anpressdruck der Lamellen **28** an den Kugelkopf erreicht, wobei eine Kraftverstärkung über eine Ringfeder **29,** beispielsweise in der Ausführungsform einer Spiralfeder **(****FIGUR 7****)** oder eines O-Rings **(****FIGUR 8****),** erreicht wird. Dadurch wird erreicht, dass die Windsogsicherung **08** sicher ihre Funktion erfüllen und das PV-Paneel **02** vor Beschädigung aufgrund von unzulässiger Durchbiegung nach oben durch angreifende Windsoglasten schützen kann und dabei trotzdem eine schnelle, einfache und kostengünstige De-, Neu- oder Wiedermontage des Photovoltaikpaneels **02** ermöglicht.

### BEZUGSZEICHENLISTE

- 01: Photovoltaikmodul
- 02: Photovoltaikpaneel
- 03: Solarzellenreihe
- 04: Reflektorfolie
- 05: Trägersubstrat
- 06: Leichtbauplatte
- 07: Rahmenkonstruktion
- 08: Windsogsicherung
- 09: Substratabdeckung
- 10: Oberteil
- 11: Unterteil
- 12: Steckbock
- 13: Aufnahmeöffnung
- 14: Hinterschneidung
- 15: Ausnehmung
- 16: Steckwelle
- 17: Steckplatte
- 18: Bodenplatte
- 19: Druckverteilungsplatte
- 20: Zapfenaufnahme
- 21: Langloch
- 22: Zapfen
- 23: Umlaufnut
- 24: Omegafeder
- 25: Durchgangsbohrung
- 26: Kugelkopf
- 27: Kugelkorb
- 28: Lamelle
- 29: Ringfeder

## Patentansprüche

1. Photovoltaikmodul mit einem biegsamen Photovoltaikpaneel mit mehreren Salaszellenreihen, das über Zwischenstücke mit einem Trägersubstrat, fest, aber lösbar verbunden ist, wobei die Zwischenstücke zueinander beabstandet über die Fläche des Photovoltaikpaneels verteilt sind,
**dadurch gekennzeichnet, dass**
die Zwischenstücke als zumindest zweiteilige, an den durch eine Rahmenkonstruktion (07) vorgegebenen Abstand zwischen Photovoltaikpaneel (02) und Trägersubstrat (05) in ihrer Höhe angepasste Windsogsicherungen (08) aus einem Oberteil (10) und einem Untertell (11) ausgebildel sind, wobei das Oberteil (10) fest mit dem Photovoltaikpaneel (02) und das Unterteil (11) fest mit dem Trägersubstrat (05) verbunden ist und Oberteil (10) und Unterteil (11) fest, aber lösbar miteinander verbunden sind.

2. Photovoltaikmodul nach Anspruch 1,
**dadurch gekennzeichnet, dass**
die Windsogsicherungen (08) eine längliche, stabförmige Ausbildung aufweisen.

3. Photovoltaikmodul nach Anspruch 1,
**dadurch gekennzeichnet, dass**
das Oberteil (10) und das Unterteil (11) durch eine Klebung oder eine Verschraubung mit dem Photovoltaikpaneel (02) oder dem Trägersubstrat (05) verbunde sind.

4. Photovolkaikmodul nach Anspruch 1,
**dadurch gekennzeichnet, dass**
das Unterteil (11) der Windsogsicherungen (08) als Steckwelle (16) mit einer an dem Photovoltaikpaneel (02) zugewandten Ende vorgesehenen Steckplatte (17) mit einem größeren Durchmesser als die Steckwelle (16) und das Oberteil (10) der Windsogsicherung (08) als Steckbock (12) mit einer an dem Trägersubstrat (05) zugewandten Ende seitlichen Aufnahmeöffnung (13) für die Steckwelle (16) mit einer Hinterschneidung (14) für die Steckplatte (17) ausgebildet ist, wobei die Aufnahmeöffnungan (13) der Steckböcke (12) aller vorgesehenen Windsogsinherungen (08) in die gleiche Richtung orientiert sind.

5. Photovoltaikmodul nach Anspruch 4,
**dadurch gekennzeichnet, dass**
die Steckwelle (16) mit einer Bodenplatte (18) fest verbunden ist.

6. Photovoltaikmodul nach Anspruch 1,
**dadurch gekennzeichnet dass**
das Unterteil (11) der Windsogsicherungen (08) als Zapfenaufnahme (20) mit zwei einander diametral gegenüberliegenden azimutalen Langlöchem (21) und das Oberteil (10) der Windsogsicherung (08) als Zapfen (22) mit einer azimutalen Umlaufnut (23) ausgebildet ist und in die Umlaufnut (23) durch die Langlöcher (21) hindurch eine Omegafeder (24) eingreift.

7. Photovoltaikmodul nach Anspruch 6,
**dadurch gekennzeichnet, dass**
die Windsogsicherungen (08) im Randbereich des Photovoltaikmoduls (01) angeordnet sind.

8. Photovoltaikmodul nach Anspruch 1,
**dadurch gekennzeichnet, dass**
das Oberteil (10) der Windsogsicherung (08) als Kugelkopf (26) und das Unterteil (11) als Kugelkorb (27) mit elastischen Lamellen (28) ausgebildet ist, wobei die Lamellen (28) von einem Federring (29) an den Kugelkopf (26) angedrückt werden.

9. Photovoltaikmodul nach Anspruch 1,
**dadurch gekennzeichnet, dass**
das Trägersubstrat (05) als Leichtbauplatte (06) oder als Fassadenplatte ausgebildet ist.

10. Photovoltaikmodul nach den Ansprüchen 4 und 9,
**dadurch gekennzeichnet, dass**
die Steckwelle (16) durch die Leichtbauplatte (06) hindurchgreift und mit zumindest einer Druckverteilungsplatte (19) gegenüber der Leichtbauplatte (06) abgestützt ist.

11. Photovoltaikmodul nach Anspruch 1,
**dadurch gekennzeichnet, dass**
das Photovoftaikpaneel (02) auf beiden Seiten aktiv und auf dem Trägersubstrat (05) eine Reflektorfolie (04) angeordnet ist.

12. Photovoltaikmodul nach Anspruch 1,
**dadurch gekennzeichnet, dass**
über die Breite des Photovoltaikmoduls (01) zwei Windsogsicherungen (08) und über die Länge so viele Windsogsicherungen (08) vorgesehen sind, dass immer drei quer verlaufende Solarzellenreihen (03) zwischen zwei Windsogsicherungen (08) liegen.

13. Photovoltaikmodul nach Anspruch 1,
**dadurch gekennzeichnet dass**
die zumindest das Oberteil (10) der Windsogsicherung (08) aus klarem Polymethylmethacrylat besteht.

14. Photovoltaikmodul nach Anspruch 1,
**dadurch gekennzeichnet, dass**
die das Unterteil (11) der Windsogsicherung (08) aus undurchsichtigem Polyamid besteht.

## Claims

1. A photovoltaic module with a flexible photovoltaic panel with a plurality of solar cell rows, which via spacers is connected securely, but releasably, with a supporting substrate, wherein
the spacers are distributed, spaced apart from one another, over the surface area of the photovoltaic panel,
**characterised in that**,
the spacers are designed as wind suction security devices (08) in at least two parts, with an upper part (10) and a lower part (11), matched in their height to the separation distance, prescribed by means of a frame structure (07), between photovoltaic panel (02) and supporting substrate (05), wherein
the upper part (10) is securely connected with the photovoltaic panel (02) and the lower part (11) is securely connected with the supporting substrate (05), and upper part (10) and lower part (11) are securely, but releasably, connected with one another.

2. The photovoltaic module in accordance with Claim 1,
**characterised in that**,
the wind suction security devices (08) have an elongated, rod-shaped design.

3. The photovoltaic module in accordance with Claim 1,
**characterised in that**,
the upper part (10) and the lower part (11) are connected with the photovoltaic panel (02) or the supporting substrate (05) by means of an adhesive bond, or by means of a screw connection.

4. The photovoltaic module in accordance with Claim 1,
**characterised in that**,
the lower part (11) of the wind suction security device (08) is designed as a stub shaft (16) with a platen (17) provided on the end facing towards the photovoltaic panel (02) with a larger diameter than the stub shaft (16), and the upper part (10) of the wind suction security device is designed as an insert block (12) with a lateral reception aperture (13) on the end facing towards the supporting substrate (05) for the stub shaft (16) with an undercut (14) for the platen (17), wherein
the reception apertures (13) of the insert blocks (12) of all the wind suction security devices (08) provided are orientated in the same direction.

5. The photovoltaic module in accordance with Claim 4,
**characterised in that**,
the stub shaft (16) is securely connected with a base plate (18).

6. The photovoltaic module in accordance with Claim 1,
**characterised in that**,
the lower part (11) of the wind suction security device (08) is designed as a pin mounting (20) with two elongated holes (21) located diametrically opposite to one another, and the upper part (10) of the wind suction security device (08) is designed as a pin (22) with an azimuthal circumferential groove (23) and an omega spring (24) engages in the circumferential groove (23) through the elongated holes (21).

7. The photovoltaic module in accordance with Claim 6,
**characterised in that**,
the wind suction security devices (08) are arranged in the edge region of the photovoltaic module (01).

8. The photovoltaic module in accordance with Claim 1,
**characterised in that**,
the upper part (10) of the wind suction security device (08) is designed as a spherical head (26) and the lower part (11) is designed as a spherical cage (27) with elastic leaves (28), wherein
the leaves (28) are pressed by means of a spring ring (29) onto the spherical head (26).

9. The photovoltaic module in accordance with Claim 1,
**characterised in that**,
the supporting substrate (05) is designed as a lightweight construction panel (06) or as a facade panel.

10. The photovoltaic module in accordance with the Claims 4 and 9,
**characterised in that**,
the stub shaft (16) engages through the lightweight construction panel (06), and is supported with at least one pressure distribution plate (19) with respect to the lightweight construction panel (06).

11. The photovoltaic module in accordance with Claim 1,
**characterised in that**,
the photovoltaic panel (02) is active on both sides, and a reflector film (04) is arranged on the supporting substrate (05).

12. The photovoltaic module in accordance with Claim 1,
**characterised in that**,
two wind suction security devices (08) are provided over the width of the photovoltaic module (01), and over the length as many wind suction security devices (08) are provided such that three solar cell rows (03) running in the transverse direction are always located between two wind suction security devices (08).

13. The photovoltaic module in accordance with Claim 1,
**characterised in that**,
at least the upper part (10) of the wind suction security device (08) consists of a clear polymethylmethacrylate.

14. The photovoltaic module in accordance with Claim 1,
**characterised in that**,
the lower part (11) of the wind suction security device (08) consists of a non-transparent polyamide.

## Revendications

1. Module photovoltaïque comprenant un panneau photovoltaïque souple avec plusieurs rangées de cellules solaires, lequel est relié de façon fixe, mais amovible par des pièces intermédiaires à un substrat porteur, les pièces intermédiaires étant réparties de façon espacée les unes des autres sur la surface du panneau photovoltaïque,
**caractérisé en ce que**
les pièces intermédiaires sont conçues sous forme de protections contre l'aspiration par le vent (08) au moins en deux parties, adaptées dans leur hauteur à l'espacement, prédéfini par une construction cadre, (07)entre le panneau photovoltaïque (02) et le substrat support (05) et comprenant une partie supérieure (10) et une partie inférieure (11), la partie supérieure (10) étant reliée fixement au panneau photovoltaïque (02) et la partie inférieure (11) étant reliée fixement au substrat porteur (05) et la partie supérieure (10) et la partie inférieure (11 étant reliées fixement, mais de façon amovible l'une à l'autre.

2. Module photovoltaïque selon la revendication 1
**caractérisé en ce que**
les protections contre l'aspiration par le vent (08) présentent une conception allongée et en forme de barre.

3. Module photovoltaïque selon la revendication 1
**caractérisé en ce que**
la partie supérieure (10) et la partie inférieure (11) sont reliées par un collage ou un assemblage vissé au panneau photovoltaïque (02) ou au substrat support (05).

4. Panneau photovoltaïque selon la revendication 1,
**caractérisé en ce que**
la partie inférieure (11) des protections contre l'aspiration par le vent (08) est conçue sous forme d'arbre emboîtable (16) avec une plaque emboîtable (17) prévue sur l'extrémité tournée vers le panneau photovoltaïque (02) et présentant un diamètre plus grand que l'arbre emboîtable (16) et la partie supérieure (10) de la protection contre l'aspiration par le vent (08) étant conçue comme un support emboîtable (12) avec une ouverture de logement (13) latérale sur l'extrémité tournée vers le substrat porteur (05) pour l'arbre emboîtable (16) avec une contre-dépouille (14) pour la plaque emboîtable (17), les ouvertures de logement (13) des supports emboîtables (12) de toutes les protections contre l'aspiration par le vent (08) prévues étant orientées dans la même direction.

5. Module photovoltaïque selon la revendication 4,
**caractérisé en ce que**
l'arbre emboîtable (16) est relié fixement à une plaque de fond (18).

6. Module photovoltaïque selon la revendication 1,
**caractérisé en ce que**
la partie inférieure (11) des protections contre l'aspiration par le vent (08) est conçue comme logement de tenon (20) avec deux trous oblongs (21) azimutaux diamétralement opposés et la partie supérieure (10) de la protection contre l'aspiration par le vent (08) comme tenon (22) avec une rainure périphérique (23) azimutale et un ressort oméga (24) s'engage dans la rainure périphérique (23) à travers les trous oblongs (21).

7. Panneau photovoltaïque selon la revendication 6,
**caractérisé en ce que**
les protections contre l'aspiration par le vent (08) sont disposées dans la zone de bordure du module photovoltaïque (01).

8. Module photovoltaïque selon la revendication 1,
**caractérisé en ce que**
la partie supérieure (10) de la protection contre l'aspiration par le vent (08) est conçue sous forme de tête sphérique (26) et la partie inférieure (11) comme corbeille sphérique (27) avec des lamelles (28) élastiques, les lamelles (28) étant pressées par une bague ressort (29) sur la tête sphérique (26).

9. Module photovoltaïque selon la revendication 1,
**caractérisé en ce que**
le substrat support (05) est conçu sous forme de panneau léger (06) ou de panneau de façade.

10. Module photovoltaïque selon les revendications 4 et 9,
**caractérisé en ce que**
l'arbre emboîtable (16) passe à travers le panneau léger (06) et est soutenu avec au moins une plaque de répartition de pression (19) par rapport au panneau léger (06).

11. Module photovoltaïque selon la revendication 1,
**caractérisé en ce que**
le panneau photovoltaïque (02) est disposé de façon active sur les deux côtés et un film réflecteur (04) est disposé sur le substrat support (05).

12. Module photovoltaïque selon la revendication 1,
**caractérisé en ce que**
deux protections contre l'aspiration par le vent (08) sont prévues sur la largeur du module photovoltaïque (01) et un nombre suffisant de protections contre l'aspiration par le vent (08) étant prévu sur la longueur pour qu'on ait toujours trois rangées de cellules solaires (03) agencées en travers entre deux protections contre l'aspiration par le vent (08).

13. Module photovoltaïque selon la revendication 1,
**caractérisé en ce que**
au moins la partie supérieure (10) de la protection contre l'aspiration par le vent (08) est à base de polyméthylméthacrylate transparent.

14. Module photovoltaïque selon la revendication 1,
**caractérisé en ce que**
la partie inférieure (11) de la protection contre l'aspiration par le vent (08) est à base de polyamide opaque.
